# EUROPEAN PATENT SPECIFICATION

(11) **EP 0 959 671 B1**
(45) Date of publication and mention of the grant of the patent: **29.10.2003**
(21) Application number: 97902734.9
(22) Date of filing: 10.02.1997
(51) Int. Cl.: A01K 1/10

(54) **FEEDING FENCE**
FRESSGITTER
CORNADIS D'AFFOURAGEMENT

(30) Priority: 09.02.1996 NL 1002294
(43) Date of publication of application: 01.12.1999
(73) Proprietor: Weelink, Johannes Martinus Willibrordus, NL-9481 AD Vries (NL)
(72) Inventor: Weelink, Johannes Martinus Willibrordus, NL-9481 AD Vries (NL)
(74) Representative: 't Jong, Bastiaan Jacob
(86) International application number: NL9700045
(87) International publication number: WO97033465

(56) References cited:
- EP-A- 0 061 817
- GB-A- 2 259 437

## Description

The present invention relates to a feeding fence for use in a stall according to the preamble of the appended single main claim

Such a feeding fence is known from the European patent application 0 061 817, where the fence comprises a contra-weight, connected to the elongate flexible member. For such a contra-weight voluminous, upwardly extending spaces are required at the side of the feeding fence, which is intended for the animals. The elongate flexible member is used to retract the feeding fence to the retracted begin position under influence gravity acting on the contra-weight. The forward movement of the feeding fence is free. The animals can push the feeding fence forward in the direction of the extending end position with no limitation.

A disadvantage of the known feeding fence is, that there is no control over the intake of fodder by the animals. Another disadvantage is the space, required for the contra-weight, which is necessary arranged at the side of the fence, intended for the animals. In view of the weight of the feeding fences, a heavy contra-weight is required. A heavy contra-weight is directly related to a voluminous contra-weight, therefore, much space is required. Apart from the space loss, a housing for the contra-weight and elongate flexible member will hamper the free movement of the animals through the stall at the side of the feeding fence, that is intended for them. Also, a further disadvantage is, that a construction is required underneath the stall floor to house the elongate flexible member, which is used to connect the displaceable feeding fence, to the contra-weight. Such a configuration with components underneath the stall floor to connect the displaceable feeding fence and a distant drive is complex and costly.

It is intended with the present invention to remove or diminuish the above mentioned disadvantages of the known feeding fences, to which end a feeding fence according to the present invention is distinguished by the features of the characterizing portion of the appended single main claim.

A feeding fence according to the present invention is very reliable and simple at lower costs.

A feeding fence according to the present invention therefore comprises very reliable and comparatively inexpensive displacing means which can, if desired, be driven manually.

In a preferred embodiment the blocking means are designed such that they engage a part of the displacing means and the frame.

Since the displacing means comprise only parts which have to move relative to the frame in order to effect displacement of the feeding fence, effective blocking of the displacement is ensured by fixation of one of these parts in relation to the frame.

In another preferred embodiment the feeding fence according to the present invention is distinguished by a handle for driving of the shaft.

As a result hereof very reliable and simple operation of the displacing means is effected and the high costs associated with the motors are avoided.

The present invention is further elucidated with reference to the figure description hereinbelow of a number of embodiments thereof. In the drawing:
fig. 1 shows a perspective view of a feeding fence according to the present invention;
fig. 2 is a perspective view of a detail of an alternative embodiment of the blocking means;
fig. 3 is a perspective view of a detail of a second alternative embodiment of the blocking means; and
fig. 4 is a partly cut away perspective view of a third alternative embodiment of the blocking means.

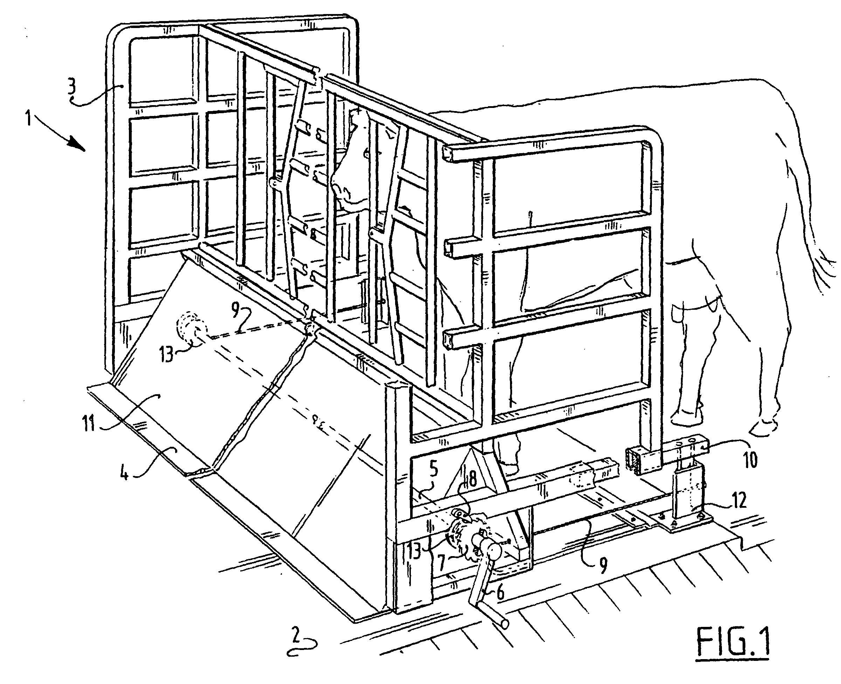

The feeding fence 1 shown in fig. 1 comprises: a frame designed as fence 3, slide 4 and front plate 11; a drive shaft 5; a drive member designed as cables 9; a rotatable element designed as drums 13. The feeding fence 1 is slidable over a stall floor 2 under the influence of the weight of animals reaching for food through fence 3. Arranged on stall floor 2 are fixing feet 12 to which are fastened cables 9. Cables 9 are also trained round the drums 13 and are fixed thereto so that the displacement distance of feeding fence 1 is limited to the length of the cables 9 to be unwound from drums 13.

A ratchet wheel 7 is mounted on one of the drums 13, wherein the blocking means are designed as a ratchet 8 fixed to the frame for blocking the ratchet wheel 7, and therefore the drum 13, in order to prevent undesired unwinding of cables 9, wherein the cables 9 under tension effectively prevent displacement.

By placing ratchet 8 in the situation thereof which releases ratchet wheel 7, a desired length of the cables 9 can be unwound from drums 13, whereafter under the influence of the animals reaching for fodder through fence 3 the feeding fence 1 is shifted in the direction of the fodder until cables 9 are once again placed under tension.

After reaching the extreme position of the feeding fence, which extreme position corresponds with the full length of cables 9, or the situation wherein all the fodder has been consumed by the animals, feeding fence 1 can be shifted back to the starting position thereof by re-winding the cables 9 on the drums 13 using a handle 6 for driving the drive shaft 5. In this manner the feeding fence 1 is pulled back to the starting situation thereof on the cables 9 fastened to the fixing feet 12.

In order to prevent the possibility of feeding fence 1 coming to lie out of line on the stall floor 2, both drums are coupled by means of drive shaft 5. Blocking of the drums 13 is hereby also effected using only the ratchet 8 engaging on ratchet wheel 7. In order to prevent an askew position of the feeding fence 1 on stall floor 2 a guide designed as guide rod 10 is further arranged on the fixing foot 12, wherein guide rod 10 extends in a hollow tube 21 of fence 3.

In one embodiment (not shown) the feeding fence further comprises a mat, for instance of rubber, one side of which is fastened to the frame and an oppositely located side is fixed to the stall floor. The front side of the feeding fence rests with the slide on the stall floor and the rear side of the feeding fence supports on the guide rod so that the mat can roll up and unroll freely during respectively rearward and forward displacement of the feeding fence. Such a mat is herein arranged to collect excreta of the animals so that this cannot become mixed in with the fresh fodder to be deposited in front of the feeding fence after rearward displacement of the feeding fence to the starting position thereof.

In an alternative embodiment the drums 13 can be driven separately by means of handles without a drive shaft connecting the drums, wherein the drums are each provided with a ratchet wheel and a blocking ratchet is arranged at each ratchet wheel.

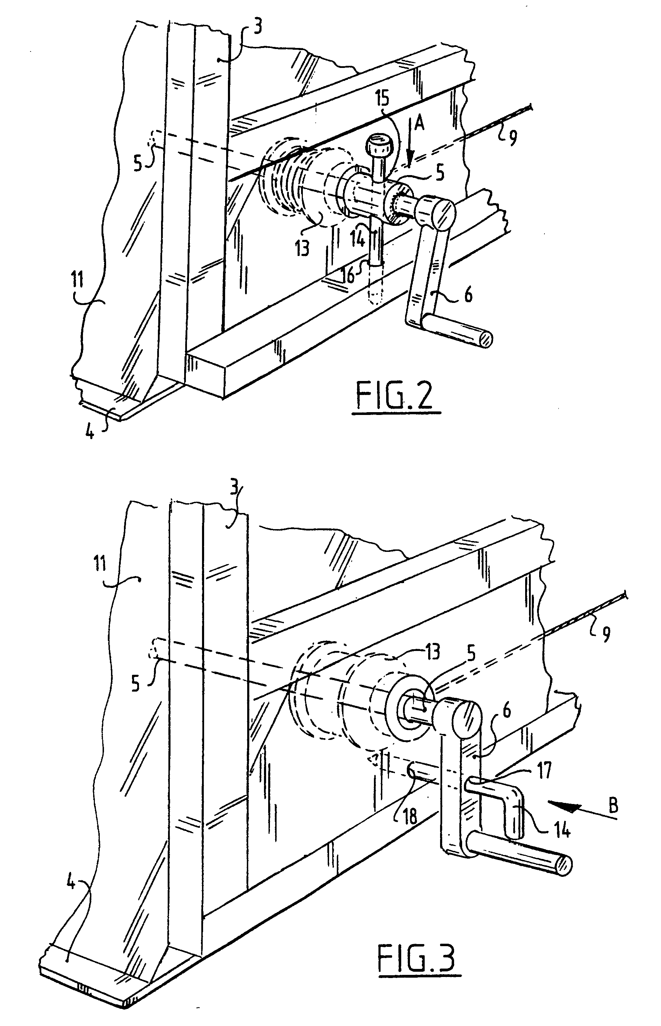

Fig. 2 shows an alternative embodiment wherein movement of substantially the drum 13, and therefore unwinding of cable 9, is prevented in that a pin 14 is placed in the direction of arrow A through a passage 15 in drive shaft 5 and in a recess 16 in a beam of the fence 3.

Unwinding of cable 9 can therefore take place in stepwise manner, wherein the minimal length of cable 9 for unwinding corresponds with a half-turn of handle 6. In order to obtain smaller minimum lengths of cable 9 for unwinding more passages 15 can, if desired, be arranged in drive shaft 5.

In the embodiment shown in fig. 3 further unwinding of cable 9 from drum 13 is prevented in that the pin 14 is placed in the direction indicated with arrow B through a passage 17 in handle 6 and into a recess 18 in the fence 3. The minimal length of cable 9 for unwinding from drum 13 herein corresponds with a full turn of handle 6. In order to realize a smaller length of cable 9 for unwinding from drum 13, one or more additional recesses 18 can be arranged in fence 3.

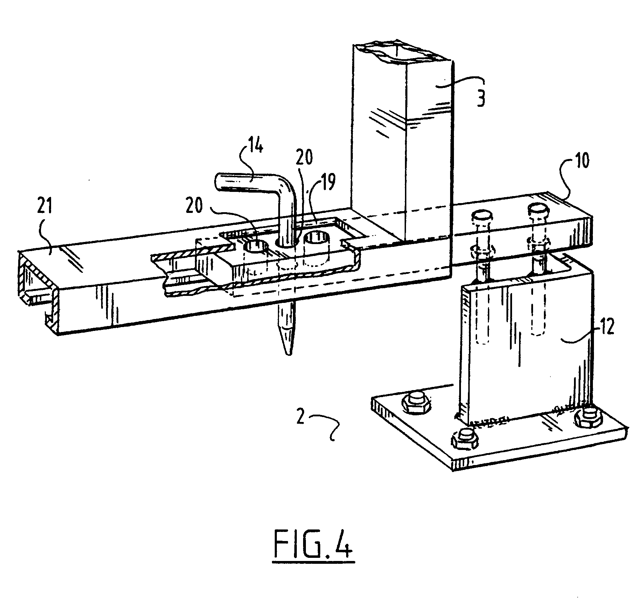

In the embodiment shown in fig. 4 forward sliding of feeding fence 1 over stall floor 2 after a preadjusted position has been reached is also prevented by means of the pin 14.

The beam of fence 3 in which the guide rod 10 extends is designed here as C-shaped profile 21. An elongate recess 19 is arranged in the profile 21. A plurality of passages 20 is also arranged in guide rod 10. Recess 19 extends over a plurality of passages 20. When the rear edge of recess 19, as seen in the direction of forward sliding of feeding fence 1, lies under the influence of the weight of the animals against the pin 14 which is placed through one of the holes 20 in guide rod 10, further movement of feeding fence 1 is prevented. When this situation has been reached and in this situation there is no longer any fodder lying within the reach of the animals in the stall, the pin 14 can be moved forward one or more of the holes 20 located inside recess 19 and can be placed therein so that the feeding fence can then be shifted forward again over a distance corresponding therewith under the influence of the weight of the animals.

A blocking of a part of the displacing means as shown in fig. 2 and in fig. 3 is herein no longer necessary and the drums 13 shown therein or other embodiment of the rotatable element may move freely. The displacing means serve in this case only to re-place feeding fence 1 in the starting situation.

In another embodiment (not shown) of a feeding fence according to the present invention the handle 6 is coupled to drive shaft 5 by means of a transmission, for instance mutually engaging toothed wheels, or by means of a chain trained round the toothed wheels, wherein a toothed wheel is fixed to the drive shaft and another toothed wheel to the handle.

## Claims

1. Feeding fence for use in a stall such as a cow stall, which is displaceable over the stall floor and which comprises a frame having a fence (3) thereon with openings, through which openings cattle can reach for fodder and displacing means (5, 6, 9, 13) which are coupled to the frame for displacing the frame and which comprise a drive member (9) comprising an elongate flexible element for pulling back the feeding fence from an extreme position to a starting position, **characterized in that** the displacing means further comprise at least one rotatable element (13) and at least one shaft (5) for driving which is connected to the rotatable element, **in that** the drive member is connected to the stall floor (2) and is engaged by the rotatable element (13) and **in that** blocking means (7, 8, 14, 15, 16, 17, 18, 19, 20) are arranged to block displacement of the frame.

2. Feeding fence as claimed in claim 1, **characterized in that** the blocking means (7, 8; 14, 15, 16; 14, 17, 18) are designed such that they engage on a part (6) of the displacing means and the frame.

3. Feeding fence as claimed in claim 2, **characterized in that** a ratchet wheel (7) is connected to the shaft (5), wherein the blocking means comprise a ratchet co-acting (8) therewith.

4. Feeding fence as claimed in claim 2, **characterized in that** a worm wheel is connected to the shaft, wherein the blocking means comprise a worm co-acting therewith.

5. Feeding fence as claimed in any of the foregoing claims, **characterized by** a handle (6) for driving of the shaft.

6. Feeding fence as claimed in claims 2 and 5, **characterized in that** the handle (6) comprises engaging means (17) for engagement thereof by the blocking means (14).

7. Feeding fence as claimed in claim 2, **characterized in that** the shaft (5) comprises engaging means (15) for engagement thereof by the blocking means (14).

8. Feeding fence as claimed in any of the foregoing claims, **characterized in that** the displacing means comprise at least one guide (10) engaging on the frame.

9. Feeding fence as claimed in claims 2 and 8, **characterized in that** the guide (10) comprises engaging means (20) for engagement thereof by the blocking means (14).

10. Feeding fence as claimed in any of the claims 6, 7 of 9, **characterized in that** the engaging means comprise a passage (15; 17) and the blocking means a pin (14) and in the frame an opening (16; 18) is arranged at a position corresponding with the passage (15 17), wherein the pin can be placed through the passage into the opening in the frame.

## Patentansprüche

1. Fressgitter zur Verwendung in einem Stall, wie beispielsweise einem Kuhstall, das über dem Stallboden verschiebbar ist, mit einem Rahmen, der ein Gitter (3) mit Öffnungen hat, durch welche Öffnungen das Vieh das Viehfutter erreichen kann und mit Verstellmitteln (5, 6, 9, 13), die an den Rahmen gekoppelt sind, um den Rahmen zu verstellen, und die ein Antriebselement (9) aufweisen, welches ein langgestrecktes flexibles Element zum Zurückziehen des Fressgitters von einer extremen Position in eine Ausgangsposition hat, **dadurch gekennzeichnet, dass** die Verstellmittel ferner wenigstens ein drehbares Element (13) und wenigstens eine Welle (5) zum Antreiben, die mit dem drehbaren Element verbunden ist, aufweisen, dass das Antriebselement mit dem Stallboden (2) verbunden ist und mit dem drehbaren Element (13) in Eingriff steht, und dass Sperrmittel (7, 8, 14, 15, 16, 17, 18, 19, 20) vorgesehen sind, um die Verstellung des Rahmens zu sperren.

2. Fressgitter nach Anspruch 1, **dadurch gekennzeichnet, dass** die Sperrmittel (7, 8; 14, 15, 16; 14, 17, 18) so gestaltet sind, dass sie mit einem Teil (6) der Verstellmittel und dem Rahmen in Eingriff sind.

3. Fressgitter nach Anspruch 2, **dadurch gekennzeichnet, dass** an der Welle (5) ein Schaltrad (7) befestigt ist, wobei die Sperrmittel eine mit diesem zusammenwirkende Klinke (8) aufweisen.

4. Fressgitter nach Anspruch 2, **dadurch gekennzeichnet, dass** an der Welle ein Schneckenrad befestigt ist, wobei die Blockiermittel eine mit diesem zusammenwirkende Schnecke haben.

5. Fressgitter nach einem der vorstehenden Ansprüche, **gekennzeichnet durch** einen Handgriff (6) zum Antreiben der Welle.

6. Fressgitter nach Anspruch 2 und 5, **dadurch gekennzeichnet, dass** der Handgriff (6) Eingriffsmittel (17) zum Ineingriffgelangen mit den Sperrmitteln (14) aufweist.

7. Fressgitter nach Anspruch 2, **dadurch gekennzeichnet, dass** die Welle (5) Eingriffsmittel (15) zum Ineingriffgelangen durch die Sperrmittel (14) aufweist.

8. Fressgitter nach einem der vorstehenden Ansprüche, **dadurch gekennzeichnet, dass** die Verstellmittel wenigstens eine Führung (10) aufweisen, die mit dem Rahmen in Eingriff steht

9. Fressgitter nach Anspruch 2 und 8, **dadurch gekennzeichnet, dass** die Führung (10) Eingriffsmittel (20) zum Ineingriffgelangen durch die Sperrmittel (14) aufweist.

10. Fressgitter nach einem der Ansprüche 6, 7 oder 9, **dadurch gekennzeiehnet,** dass die Eingriffsmittel einen Durchlass (15; 17) und die Sperrmittel einen Stift (14) aufweisen, und dass in dem Rahmen eine Öffnung (16; 18) an einer Position angeordnet ist, die dem Durchlass (15, 17) entspricht, wobei der Stift durch den Durchlass in die Öffnung in den Rahmen gesteckt werden kann.

## Revendications

1. Cornadis d'affouragement destiné à être utilisé dans une étable telle qu'une étable à vaches, qui est déplaçable sur le plancher de l'étable et qui comprend un cadre comportant un cornadis (3), présentant des ouvertures à travers lesquelles le bétail peut atteindre le fourrage, et des moyens de déplacement (5, 6, 9, 13) qui sont couplés au cadre en vue de déplacer le cadre et qui comprend un élément d'entraînement (9) comprenant un élément flexible allongé destiné à tirer en arrière le cornadis d'affouragement d'une position extrême vers une position de départ, **caractérisé en ce que** les moyens de déplacement comprennent en outre au moins un élément rotatif (13) et au moins un arbre d'entraînement (5) qui est raccordé à l'élément rotatif, **en ce que** l'élément d'entraînement est raccordé au plancher (2) de l'étable et est engagé avec l'élément rotatif (13) et **en ce que** des moyens de blocage (7, 8, 14, 15, 16, 17, 18, 19, 20) sont agencés pour bloquer le déplacement du cadre.

2. Cornadis d'affouragement selon la revendication 1, **caractérisé en ce que** les moyens de blocage (7, 8 ; 14, 15, 16 ; 14, 17, 18) sont conçus de telle sorte qu'ils s'engagent avec une partie (6) des moyens de déplacement et avec le cadre.

3. Cornadis d'affouragement selon la revendication 2, **caractérisé en ce que** une roue à cliquet (7) est raccordée à l'arbre (5), les moyens de blocage comprenant un cliquet (8) coopérant avec ladite roue à cliquet.

4. Cornadis d'affouragement selon la revendication 2, **caractérisé en ce que** une roue tangente est raccordée à l'arbre, les moyens de blocage comprenant un pignon coopérant avec ladite roue tangente.

5. Cornadis d'affouragement selon l'une quelconque des revendications précédentes, **caractérisé par** une poignée (6) destinée à entraîner l'arbre.

6. Cornadis d'affouragement selon la revendication 2 et 5, **caractérisé en ce que** la poignée (6) comprend des moyens d'engagement (17) destinés à s'engager avec les moyens de blocage (14).

7. Cornadis d'affouragement selon la revendication 2, **caractérisé en ce que** l'arbre (5) comprend des moyens d'engagement (15) destinés à s'engager avec les moyens de blocage (14).

8. Cornadis d'affouragement selon l'une quelconque des revendications précédentes, **caractérisé en ce que** les moyens de déplacement comprennent au moins un guide (10) s'engageant avec le cadre.

9. Cornadis d'affouragement selon les revendications 2 et 8, **caractérisé en ce que** le guide (10) comprend des moyens d'engagement (20) destinés à s'engager avec les moyens de blocage (14).

10. Cornadis d'affouragement selon l'une quelconque des revendications 6, 7 à 9, **caractérisé en ce que** les moyens d'engagement comprennent un passage (15 ; 17) et les moyens de blocage comprennent une broche (14) et une ouverture (16 ; 18) est ménagée dans le cadre en une position correspondant au passage (15, 17), la broche pouvant être placée à travers le passage dans l'ouverture ménagée dans le cadre.
